# EUROPÄISCHE PATENTSCHRIFT

(11) **EP 0 460 555 B1**
(45) Veröffentlichungstag und Bekanntmachung des Hinweises auf die Patenterteilung: **08.10.1997**
(21) Anmeldenummer: 91108978.7
(22) Anmeldetag: 01.06.1991
(51) Int. Cl.: C01B 15/12

(54) **Verfahren zur Herstellung von mikrokristallinen Perborat-Produkten**
Process for the preparation of microcrystalline perborate products
Procédé de préparation de produits perborates microcristallins

(30) Priorität: 06.06.1990 DE 4018039
(43) Veröffentlichungstag der Anmeldung: 11.12.1991
(73) Patentinhaber: Solvay Interox GmbH, D-30625 Hannover (DE)
(72) Erfinder: Rösler, Richard, W-5456 Rheinbrohl (DE); Dötsch, Werner, W-5462 Bad Hönningen (DE); Zeiss, Werner, W-8038 Gröbenzell (DE); Siegel, Rudolf, W-5450 Neuwied (DE)
(74) Vertreter: Lauer, Dieter, Dr.

(56) Entgegenhaltungen:
- EP-A- 0 294 904
- FR-A- 1 336 587
- US-A- 2 380 779

## Beschreibung

Die Erfindung bezieht sich auf ein Verfahren zur Herstellung von mikrokristallinen Perborat-Produkten und hierfür in einer Variante des Verfahrens verwendete lagerstabile hochkonzentrierte wäßrige Lösungen, enthaltend eine Borsauerstoffverbindung, Wasserstoffperoxid und Natriumhydroxid in spezieller Zusammensetzung.

Im Rahmen der Entwicklung von flüssigen Bleich-, Desinfektions- und Flüssigwaschmittelformulierungen, neuerdings z.B. auch flüssig-wäßrigen Waschmittelformulierungen, besteht bei Herstellern der Wunsch bleichaktive Verbindungen wie Perborate (z.B. Natriumperborat-Tetrahydrat = PBS-4) in die flüssigen Formulierungen einzuarbeiten. Die Perborate liegen in diesen Formulierungen als Partikel suspendiert vor und dürfen daher insbesondere aus Gründen der physikalischen Stabilität der Suspension eine bestimmte Partikelgröße nicht überschreiten. Es wird daher angestrebt, die Perborate (z.B. PBS-4) in möglichst feiner Verteilung, d.h. in Form von Mikropartikeln mit einem Partikeldurchmesser von maximal 20 Mikrometer, bevorzugt sogar mit Partikeldurchmesser von unter 5 Mikrometer, in die Formulierungen einzubringen.

Nach den Verfahren des Standes der Technik erweist es sich als schwierig, genügend feine Perboratpartikel herzustellen, die z.B. zur Suspendierung in Flüssigwaschmittelformulierungen gut geeignet sind. Zur Sicherstellung der physikalischen Stabilität der Suspension von Perboratpartikeln partikeln in Flüssigwaschmittelformulierungen müssen im Stand der Technik Verdicker und Dispergierhilfsmittel eingesetzt werden. Es ist jedoch nachteilig, daß durch diese Maßnahme der Anteil an waschaktiven Bestandteilen in der Flüssigwaschmittelformulierung um den steil der Verdicker und Dispergiermittel vermindert ist.

Aus der US-PS 2 380 779 ist bereits ein Verfahren zur Herstellung von PBS-4 mit geringen Schüttdichten im Bereich von 100 bis 200 g/l bekannt, bei dem ausgehend von einer Borax und Wasserstoffperoxid enthaltenden Lösung mit einem pH-Wert von 6,7 bis 7,2 der pH-Wert dieser Lösung langsam durch Zugabe einer wäßrigen NaOH-Lösung angehoben wird, bis PBS-4 kristallisiert. Das Verfahren weist für eine industrielle Anwendung jedoch noch erhebliche Nachteile auf. So wird gemäß der US-PS 2 380 779 eine relativ langsame und verdünnte Arbeitsweise als zweckmäßig angesehen; d.h. es wird bei relativ niedrigen Borkonzentrationen gearbeitet und zur Erzielung eines besseren Fließverhaltens des PBS-4 relativ verdünnte NaOH (40 g/l) bevorzugt und nur langsam zur Borax/Wasserstoffperoxid-Lösung zugegeben. Das Verfahren ist zudem temperaturanfällig und muß daher bei Temperaturen unterhalb von 30° C, insbesondere bei 5 bis 15° C, ausgeführt werden. Weiterhin ist es nach der US-PS 2 380 779 zwingend erforderlich, das kristallisierte PBS-4 möglichst bald von der Mutterlauge abzutrennen und danach rasch zu trocknen, um ein unerwünschtes Kristallwachstum und ein Zusammenbacken der Kristalle zu vermeiden. Darüber hinaus wird vorgeschlagen zur Unterstützung der Kristallisation Salze oder solche Verbindungen zuzusetzen, die die Kristallkeimbildung fördern.

Aus der europäischen Patentanmeldung EP 294 904 sind bereits wäßrige Flüssigwaschmittelformulierungen mit feinkristallinem Natriumperborat-Tetrahydrat, sowie Verfahren zur Bildung des feinkristallinen Perborates in den Formulierungen bekannt. Es wird eine "in-situ-Kristallisation" von PBS-4 beschrieben, d.h. die Kristallisation von PBS-4 gegebenenfalls nach in-situ-Bildung aus Metaborat und H₂O₂ in Gegenwart von wenigstens 5 Gew.-% Tensid und wenigstens 5 Gew.-% Builder. Weiterhin werden flüssig-wäßrige Waschmittelformulierungen beansprucht, die "in-situkristallisiertes" PBS-4 mit Partikeldurchmessern von 0,5 bis 20 Mikrometer enthalten. Gemäß den Beispielen werden untere Partikelgrößen von durchschnittlich 4 bis 7 Mikrometer erreicht.

Zur Herstellung dieser Waschmittelformulierungen, die "in-situ-kristallisiertes" PBS-4 enthalten, werden in der vorgenannten europäischen Patentanmeldung zwei Verfahrensvarianten angegeben.

Die erste Verfahrensvariante bezieht sich auf ein Auflösungs-/Rekristallisationsverfahren bei dem die Perboratpartikel durch intensives Rühren von einer aus größeren Kristallen bestehenden Perborates in Gegenwart des Tensids und Builders gebildet werden. Es werden PBS-4-Partikel mit einem durchschnittlichen Partikeldurchmesser von etwa 7 Mikrometer erhalten.

Die zweite Verfahrensvariante bezieht sich auf ein Verfahren, bei dem das Perborat in situ durch chemische Reaktion von Metaborat (Na:B=1:1) mit Wasserstoffperoxid in Gegenwart von wenigstens 5 Gew.-% Tensid und wenigstens 5 Gew.-% Builder gebildet wird und dabei auskristallisiert. Entweder wird in diesem Verfahren Metaborat als Borkomponente eingesetzt. Oder es ist auch möglich Borax oder Borsäure einzusetzen; dann wird aber durch stöchiometrische Zugabe von NaOH zunächst Metaborat gebildet, welches nachfolgend durch H₂O₂-Zugabe in Gegenwart von Tensid und Builder zum auskristallisierenden Perborat umgesetzt wird. Es werden PBS-4-Partikel mit einem durchschnittlichen Partikeldurchmesser von etwa 4 Mikrometer erhalten.

Die Verfahren des Standes der Technik weisen eine Reihe von Nachteilen auf. Die beschränkte Löslichkeit von Metaborat erlaubt nur mäßige Konzentrationen an gelöster Borkomponente (etwa 20 Gew.-% Metaborat in Wasser bei 20 °C). Darüber hinaus neigen die nur mäßig konzentrierten Metaborat-Lösungen zur vorzeitigen Kristallisation.

Im Verfahren der europäischen Patentanmeldung EP 294 904 ist die Gegenwart von Tensid und Builder zum Erreichen kleiner Partikeldurchmesser zwingend, kann andererseits aber bei der Umsetzung mit H₂O₂ zu unerwünschten Nebenreaktionen führen. Ferner ist die "in-situ-Kristallisation" im Hinblick auf die erwünschten kleinen Partikeldurchmesser nicht unproblematisch hinsichtlich Steuerung und Reproduzierbarkeit.

Es bestand die Aufgabe, die Nachteile des Standes der Technik zu überwinden und ein technisch einfaches Verfahren zur Herstellung von mikrokristallinen Perborat-Produkten, insbesondere für Flüssigwaschmittelformulierungen, anzugeben, welches die Einstellung hoher gelöster Borkonzentrationen in wäßrigem Medium unter Vermeidung der vorzeitigen Kristallisation von festen Perboraten ermöglicht, welches unerwünschte Nebenreaktionen zwischen Wasserstoffperoxid und organischen Komponenten (z.B. Tensiden) von wäßrigen Flüssigwaschmitteln vermeidet, welches auch unabhängig hängig von Tensid- und Builderzusätzen durchführbar ist und welches mit hoher Reproduzierbarkeit zu mikrokristallinen Perborat-Produkten, insbesondere mirkokristallinen Natriumperborat-Tetrahydrat-Produkten führt.

Die Aufgabe wird gelöst durch das erfindungsgemäße Verfahren und die erfindungsgemäßen lagerstabilen hochkonzentrierten wäßrigen Lösungen.

Die Erfindung schlägt ein Verfahren zur Herstellung von mikrokristallinen Perborat-Produkten mit einer Partikelgröße von höchstens 10 µm vor, in welchem man
a) eine lagerstabile hochkonzentrierte wäßrige Lösung A, welche in Wasser gelöst solche Mengen an Borsauerstoffverbindung, Wasserstoffperoxid und Natriumhydroxid enthält, daß darin der auf die Gesamtlösung bezogene Borgehalt 3 bis 8 Gew.-%, das Molverhältnis von aus dem Natriumhydroxid und gegebenenfalls der Borsauerstoffverbindung stammenden Natrium zu Bor 0,60:1 bis 0,67:1 und das Molverhältnis von Aktivsauerstoff zu Bor mindestens 0,9:1 beträgt,
   möglichst schnell mit einer konzentrierten wäßrigen Natriumhydroxidlauge unter Erwärmung bis etwa 100° C, vorzugsweise bis etwa 60° C, zu einer Lösung B umsetzt, wobei die Natriumhydroxydlauge und die Lösung A in solchen Mengen eingesetzt werden, daß in der Lösung B das Molverhältnis von Natrium zu Bor 0,90:1 bis 1:1 beträgt und die Borkonzentration 1 bis 4,5 Gew.-% bezogen auf die wäßrige Lösung B beträgt, und daß man
b) durch Abkühlung der erhaltenen Lösung B auf unterhalb etwa 20° C bis ggf. hinab zu 0° C das Perborat-Produkt zur Kristallisation bringt.

Die nach dem erfindungsgemäßen Verfahren hergestellten mirkokristallinen Perborat-Produkte zeichnen sich durch ihre physikalische Beschaffenheit und durch ihre chemische Zusammensetzung aus. Es handelt sich z.B. um wäßrige Suspensionen oder Pasten von mikrokristallisierten Perboraten, die als unmittelbare Verfahrenserzeugnisse anfallen. Diese Verfahrenserzeugnisse können entweder direkt in gewünschter Menge in eine flüssig-wäßrige Bleich-, Desinfektions- oder Waschmittelformulierung etc. eingebracht werden oder gewünschtenfalls zuvor noch weiteren Behandlungsmaßnahmen unterworfen werden; z.B. können Alkohole zugesetzt werden, um das Löslichkeitsgleichgewicht weiter herabzusenken oder um Wiederauflösungs- und Rekristallisationsvorgänge zu unterdrücken. Für nichtwäßrige Anwendungen können die Suspensionen oder Pasten von mikrokristallisiertem Perborat beispielsweise auch einem Lösungsmittelaustausch, z.B. zur Herstellung nichtwäßriger Suspensionen oder Pasten, unterworfen werden bzw. in ein wasserfreies, trockenes festes mikrokristallines Perborat-Produkt überführt werden. Von der chemischen Natur her sind die erfindungsgemaß hergestellten mikrokristallinen Perborat-Produkte reine oder gemischte Alkalimetallperborate. Diese Perborate liegen in einer Hydratform vor, vorzugsweise als ein Tetrahydrat.

Die mikrokristallinen Perborat-Partikel des erfindungsgemäßen Verfahrens besitzen Partikeldurchmesser von höchstens 10 Mikrometer. In bevorzugten Ausgestaltungen des erfindungsgemäßen Verfahrens besitzen die erhaltenen mikrokristallinen Perborat-Partikel sogar Partikeldurchmesser von höchstens 5 Mikrometer, insbesondere sogar von höchstens 3 Mikrometer.

Für die Herstellung der Lösung A für den Verfahrensschritt a) können an sich beliebige Borsauerstoffverbindungen, auch solche, die bereits ein Alkalimetall enthalten, oder Gemische derselben zur Verwendung gelangen. Beispiele für als Ausgangsstoff geeignete Borsauerstoffverbindungen sind Borsäure, Boroxid (B₂O₃), Borax, z.B. Borax-Dekahydrat oder Borax-Pentahydrat, Metaborat, Bormineralien usw. Als Ausgangsstoffe für das in Lösung A enthaltene Wasserstoffperoxid kann Wasserstoffperoxid als solches, z.B. als 30 bis 85 gew.-%ige wäßrige Lösung oder auch aus Natriumperoxid in situ gebildetes Wasserstoffperoxid eingesetzt werden. Als Quelle für zur Einstellung des erfindungsgemäßen Na:B-Molverhältnisses im Bereich von 0,60:1 bis 0,67:1 in Lösung A gegebenenfalls noch zu ergänzendes Natrium können Natriumhydroxid oder -oxid dienen. Die voranstehende Aufzählung an Ausgangsstoffen ist hierbei nur beispielhaft und keinesfalls einschränkend. So ist es z.B. auch möglich Orthoboratlösungen einzusetzen, wobei dann aber zur Einstellung des Molverhältnisses von Natriumkation zu Bor z.B. Borsäure oder Boroxid und gegebenenfalls zusätzlich eine anorganische Säure wie z.B. Schwefelsäure oder Phosphorsäure zugesetzt werden muß. Darüber hinaus sei angemerkt, daß, wenn hier im Zusammenhang mit Verfahrensschritt a) von Lösungen A die Rede ist, die eine Borsauerstoffverbindung, Wasserstoffperoxid und Natriumhydroxid enthalten, dieses nicht zwingend bedeutet, daß die genannten Ausgangsstoffe nur als solche in den Lösungen A vorliegen, sondern daß vielmehr auch die beim Zusammengeben der Ausgangsstoffe sich bildenden, Reaktionsprodukte mit umfaßt sind.

Bevorzugte Ausgestaltungen der im erfindungsgemäßen Verfahren eingesetzten lagerstabilen Lösungen A besitzen eine Dichte von 1,2 bis 1,6 g/l. Insbesondere sind solche Lösungen sehr bevorzugt, die eine Dichte von 1,4 bis 1,5 g/l besitzen. Die pH-Werte solcher Lösungen liegen zwischen 4 bis 7, wobei Werte zwischen 5 bis 6 bevorzugt sind.

Die Lösung A wird mit einer basischen, in Form einer Konzentrierten wäßrigen Lösung vorliegenden anorganischen Natrium verbindung umgesetzt, z.B. mit einem wäßrigen Hydroxid oder Oxid des Alkalimetalles Natrium. Bevorzugt ist insbesondere Natriumhydroxid. In den Ausgestaltungen der Erfindung werden also Natriumhydroxidlaugen, die durch Lösen von festem Natriumhydroxid und/oder -oxid in Wasser erhalten werden können (Natronlauge), eingesetzt.

Erfindungsgemäß werden die wäßrige Lösung A unter intensivem Rühren und die in Form einer wäßrigen Lösung vorliegende Natronlauge möglichst schnell in solchen aufeinander abgestimmten Mengen vermischt, daß in der entstehenden Lösung B ein Molverhältnis von Natrium zu Bor von 0,90:1 bis 1:1 eingestellt wird. Je nach Art und Form der gewählten Ausgangsstoffe kann diese Umsetzung bei Temperaturen bis etwa 100 °C, vorzugsweise bei mäßig erhöhten Temperaturen bis etwa 60 °C durchgeführt werden.

Nach dem Verfahren der Erfindung wird die wäßrige Lösung A mit der wäßrigen Natriumhydroxidlauge zu einer klaren Lösung umgesetzt. Die Umsetzung kann sowohl ohne jegliche bzw. ohne größere Erwärmung als auch unter einer deutlichen Selbsterwärmung ablaufen oder es kann gewünschtenfalls auch Wärme von außen zugeführt werden, z.B. zur Erhöhung der Temperatur der Lösung B bis auf beispielsweise etwa 60 °C. Durch die Umsetzung wird das Molverhältnis von Natrium zu Bor aus einem Bereich mit hoher Löslichkeit für die in Lösung A vorliegenden Komponenten in einen Bereich mit geringer Löslichkeit für das Perborat-Produkt (Alkalimetall:Bor ≥ 0,90:1) verschoben. Hierbei vollziehen sich deutliche, sprunghafte Eigenschaftsveränderungen hinsichtlich der Löslichkeitseigenschaften vollziehen.

Nach dem erfindungsgemäßen Verfahren werden die mikrokristallinen Perborat-Produkte durch Abkühlung der zwischenzeitlich erhaltenen Lösungen B zur Kristallisation gebracht. Hierbei ist es insbesondere zweckmäßig, die durch die obige Umsetzung erhaltenen Lösungen B auf Temperaturen von unterhalb etwa 20 °C, bis gegebenenfalls hinab zu 0 °C abzukühlen. Gegebenenfalls kann die Mikrokristallisation durch weitere, an sich bekannte, kristallisationsbegünstigende Maßnahmen, wie z.B. Erhöhung der Keimbildungsrate durch Einwirken von Ultraschall, unterstützt werden.

In einer zweckmäßigen Ausgestaltung des erfindungsgemäßen Verfahrens enthält die eingesetzte Lösung A Wasserstoffperoxid in einer solchen Menge, daß das Molverhältnis von Aktivsauerstoff zu Bor 0,9:1 bis 1,2:1 beträgt. Bevorzugt ist eine solche Menge Wasserstoffperoxid in Lösung A enthalten, daß das Molverhältnis von Aktivsauerstoff zu Bor 0,9:1 bis 1,1:1 beträgt.

Eine Gruppe bevorzugter lagerstabiler hochkonzentrierter wäßriger Lösungen A für die vorstehenden Ausführungsformen des erfindungsgemäßen Verfahrens einen Borgehalt von 6 bis 7,5 Gew.-%.

Nach dem erfindungsgemäßen Verfahren wird mikrokristallines Natriumperborat-Tetrahydrat mit besonders feinen Perborat-Partikeln mit Partikeldurchmessern von höchstens 10 Mikrometer erhalten. Vorzugsweise erhält man mirkokristalline Natriumperborat-Tetrahydrat-Produkte mit Partikeldurchmessern von höchstens 5 Mikrometer, insbesondere von höchstens 3 Mikrometer.

Die konkrete Durchführung des Verfahrens kann je nach Art der Verwendung dieser Produkte ausgerichtet werden und in an sich beliebigen wäßrigen Medien erfolgen. Im einfachsten Fall, an dem vorstehend das Grundprinzip des Verfahrens eingehender erläutert wurde, erfolgt die Herstellung der mikrokristallinen Perboratpartikel lediglich mit Wasser als Lösungsmittel.

In einer weiteren, insbesondere in Bezug auf den Einsatz der mikrokristallinen Perborat-Hydrat-Partikel in wäßrigen Flüssigwaschmitteln, sehr zweckmäßigen Anwendung des erfindungsgemäßen Verfahrens können bei der Kristallisation auch weitere Komponenten wie an sich übliche, mit Wasser mischbare Lösungsmittel wie beispielsweise niedere Alkohole, z.B. Ethanol, n-Propanol oder iso-Propanol, Tenside, Builder, Hilfs-und Zusatzstoffe etc. für wäßrige Flüssigwaschmittel anwesend sein. Die erfindungsgemäße Herstellung einer das mikrokristalline Perborat-Produkt und ein oder mehrere weitere (in der weiter oben gegebenen Verfahrensbeschreibung noch nicht genannte), übliche, aus der Gruppe der Tenside, Builder und mit Wasser mischbaren Lösungsmittel ausgewählte Flüssigwaschmittelbestandteile enthaltenden wäßrigen Suspension unter Anwendung des erfindungsgemäßen Verfahrens zeichnet sich dadurch aus, daß man vor dem Verfahrensschritt a) die Lösung A oder die Konzentrierte wäßrige Natronlauge mit wenigstens einem der genannten üblichen Flüssigwaschmittelbestandteile versetzt. Vorzugsweise ist der zugesetzte übliche Flüssigwaschmittelbestandteil ein Tensid.

Bei der Vorbereitung solcher Mischungen vor dem Verfahrensschritt a) ist es zweckmäßig, die Mengen aller in der entgültigen wäßrigen Flüssigwaschmittelformulierung erwünschten Bestandteile so aufeinander und auf die Gesamtmischung abzustimmen, daß man nach Durchführung des Verfahrens zur Herstellung der mikrokristallinen Perborat-Hydrat-Partikel bereits die fertige Gesamtformulierung des wäßrigen Flüssigwaschmittels erhält bzw. nur noch geringfügige Maßnahmen, z.B. Zusatz geringer Mengen weiterer Zusatzstoffe zur Konfektionierung des Flüssigwaschmittels, erforderlich sind. Auch bei dieser Anwendung des erfindungsgemäßen Verfahrens wird ein sehr feines, mikrokristallines Perborat-Hydrat-Produkt mit Partikeldurchmessern von höchstens 10 Mikrometer erhalten. Bevorzugt werden Partikel mit Partikeldurchmessern von ≤ 5 Mikrometer, insbesondere ≤ 3 Mikrometer, erhalten. Demgemäß werden bei der Anwendung des erfindungsgemäßen Verfahrens mikrokristalline Natriumperborat-Tetrahydrat-Partikel hergestellt.

Das erfindungsgemäße Verfahren eignet sich vorteilhaft an sich für alle Anwendungen, für die eine Verwendung sehr feinkristalliner Aktivsauerstoff-haltiger Verbindungen wünschenswert ist oder die deren Verwendung sogar erfordern. So liegen sehr vorteilhafte Anwendungsmöglichkeiten außer auf dem Bleich- und Desinfektionsmittelsektor auch auf dem bereits erwähnten Waschmittelsektor. In diesem Zusammenhang eignet sich das erfindungsgemäße Verfahren zur Herstellung von feinkristallinen Perborat-Hydrat-Partikeln sowohl für wäßrige als auch für nicht-wäßrige Flüssigwaschmittelformulierungen bzw. gegebenenfalls auch zur direkten Erzeugung von feinkristallinen, Aktivsauerstoff-haltigen Bleichmitteln in wäßrigen Flüssigwaschmittelformulierungen. Die Flüssigwaschmittel, in die nach dem Verfahren der Erfindung hergestelte mikrokristalline Perborat-Hydrat-Partikel eingebracht wurden, sind sehr stabile Suspensionen, die auf Grund der erreichbaren geringen Partikeldurchmesser im Bereich von 0,5 bis 5 Mikrometer, nicht oder kaum zur Sedimentation der Partikel neigen. Auch nach längerer Lagerung brauchen daher diese Flüssigwaschmittel mit suspendierten erfindungsgemäßen Perboratpartikeln vor der Anwendung nicht oder nur geringfügig aufgeschüttelt zu werden.

Die überraschenden Vorteile des erfindungsgemäßen Verfahrens und der erfindungsgemäß erhaltenen Natriumperborat-Tetrahydrat-Partikel, die im Zusammenhang mit Perborat-haltigen wäßrigen Flüssigwaschmitteln herausgestellt wurden, lassen sich außer auf dem Waschmittelsektor auch in anderen Anwendungsbereichen, in denen der Einsatz feinster partikelförmiger Aktivsauerstoff-haltiger Verbindungen in flüssigen Zusammensetzungen erwünscht ist, in vergleichbarer Weise nutzen. Beispielhaft seien hier Anwendungsmöglichkeiten in Bleichmittel- und Desinfektionsmittelzusammensetzungen oder im Holzschutzbereich genannt.

Der Erfolg des erfindungsgemäßen Verfahrens beruht im wesentlichen darauf, daß von Lösungen A ausgegangen wird, die bereits von sich aus hohe gelöste Konzentrationen an aus der Borsauerstoffverbindung in Gegenwart von Wasserstoffperoxid und Natriumkationen gebildeter Peroxoborverbindung enthalten. Eine ungewöhnlich hohe Löslichkeit für die vorliegenden Borverbindungen wird erfindungsgemäß für Lösungen A gefunden, in denen die darin vorliegenden Mengen an Borsauerstoffverbindung, Wasserstoffperoxid und Natriumhydroxid so aufeinander abgestimmt sind, daß das Molverhältnis von Natrium zu Bor auf 0,60:1 bis 0,67:1 eingestellt ist; in diesen Lösungen sollte das Wasserstoffperoxid zweckmäßigerweise in Mengen enthalten sein, daß ein Molverhältnis von Aktivsauerstoff zu Bor im Bereich von 0,90 bis 1,2:1 vorliegt; bevorzugt sind Aktivsauerstoff-Bor-Molverhältnisse im Bereich von 0,9:1 bis 1,1:1. Der Betrag der erreichbaren gelösten Borkonzentration in diesen Lösungen A übersteigt denjenigen der Aktivsauerstoff-freien Lösungen deutlich. Er liegt im erfindungsgemäßen Verfahren mit 1 bis 4,5 Gew.-% an Bor um ein vielfaches höher als beispielsweise die durch Auflösung von Natriumperborat-Tetrahydrat maximal erreichbaren Borkonzentrationen (in Wasser maximal nur ca. 0,18 Gew.-% Bor, bei einer Löslichkeit in Wasser von 25,5 g/l bei 15 °C). Die Kristallisation im des erfindungsgemäßen Verfahren ist wegen der hohen gelösten Konzentrationen an Bor mit sehr hohen Keimbildungsraten verbunden und führt somit erfindungsgemäß zu mikrokristallinen Perborat-Hydrat-Produkten.

Ohne hier durch eine bestimmte Theorie festgelegt werden zu wollen, liegen entweder scheinbar bereits in den Lösungen A besondere Polyperoxoborate, insbesondere Natriumpolyperoxoborate, mit einer für das erfindungsgemäße Verfahren besonders geeigneten strukturellen Form vor. Insbesondere die in Lösung vorliegenden Natriumpolyperoxoborate scheinen einerseits eine in wäßrigem Medium äußerst gut solvatisierbare Struktur zu besitzen, die sehr hohe gelöste Konzentrationen ohne vorzeitige Kristallisationsneigung zuläßt. Andererseits lassen sich die anscheinend vorliegenden Natriumpolyperoxoborate äußerst leicht in das im wäßrigen Medium nur wenig lösliche Natriumperborat-Tetrahydrat (Löslichkeit in Wasser bei 15 °C etwa 25 g/l) überführen. Darüber hinaus scheinen sie auch gute chemische Stabilität bezüglich des Avox-Gehaltes in wäßriger Lösung zu besitzen. Sehr günstige Avox-Stabilität zeigen insbesondere solche wäßrigen Lösungen A, die sehr hohe gelöste Borkonzentrationen besitzen; diese können auch über längere Zeiträume hinweg ohne wesentliche Aktivsauerstoffverluste gelagert werden und sind nachfolgend als ein weiterer Erfindungsgegenstand näher beschrieben.

Gegenstand der Erfindung sind daher auch lagerstabile hochkonzentrierte wäßrige Lösungen, die eine Borsauerstoffverbindung, Wasserstoffperoxid und Natriumhydroxid enthalten und sich dadurch auszeichnen, daß darin der auf die Gesamtlösung bezogene Borgehalt 6 bis 7,5 Gew.-%, das Molverhältnis von aus dem Natriumhydroxid und gegebenenfalls der Borsauerstoffverbindung stammenden Natrium zu Bor 0,60:1 bis 0,67:1 und das Molverhältnis von Aktivsauerstoff zu Bor mindestens 0,9:1 beträgt. Bevorzugt sind solche lagerstabilen Lösungen, die eine Dichte von 1,4 bis 1,5 g/l und einen pH-Wert im Bereich von 5 bis 6 aufweisen.

Die im erfindungsgemäßen Verfahren eingesetzten lagerstabilen hochkonzentrierten wäßrigen Lösungen zeichnen sich dadurch aus, daß sie bei gewöhnlichen Umgebungstemperaturen (z.B. im Temperaturbereich von 10 bis 25 °C) in Form einer klaren Lösung eine aus den Bestandteilen Borsauerstoffverbindung, Wasserstoffperoxid, Wasser und Natrium gebildete Aktivsauerstoff-haltige Natrium-Borverbindung, vermutlich mit einer Natriumpolyperoxoborat-Struktur, in einer Menge enthalten, die einer gelösten Menge von mehr als ca. 500 g/l Natriumperborat-Tetrahydrat entspricht. Die erfindungsgemäßen lagerstabilen Lösungen, die sich durch einen Borgehalt von 6 bis 7,5 Gew.-% auszeichnen, enthalten diese Natriumpolyperoxoborate in klarer Lösung sogar in einer Menge, die mehr als ca. 1.200 g/l Natriumperborat-Tetrahydrat entspricht, und zeigen dennoch keine Neigung zu einer vorzeitigen Kristallisation. Wichtige handelsübliche Perborate, wie z.B. Natriumperborat-Tetrahydrat oder Natriumperborat-Monohydrat, besitzen demgegenüber erheblich geringere Löslichkeiten in Wasser oder wäßrigen Medien. So beträgt z.B. die Löslichkeit von Natriumperborat-Tetrahydrat in Wasser bei 15 °C nur 25,5 g/l bzw. bei 35 °C nur 36 g/l. Die Löslichkeit des Natriumperborat-Monohydrates entspricht im Prinzip derjenigen des Tetrahydrates, da sich das Monohydrat in Gegenwart von Wasser in das Tetrahydrat umwandelt.

Zweckmäßigerweise sollte in solchen erfindungsgemäßen lagerstabilen Lösungen, die für das oben beschriebene Verfahren zur Herstellung von mikrokristallinen Perborat-Hydrat-Produkten verwendet werden sollen, bereits ein Molverhältnis von Aktivsauerstoff zu Bor im Bereich von 0,9:1 bis 1,1:1 vorliegen. In zweckmäßigen lagerstabilen Lösungen der Erfindung, die für andere Verwendungen gedacht sind, z.B. zur Verwendung als Bleichmittellösungen oder als Desinfektionsmittellösungen bzw. zur Verwendung in der Zellstoffbleiche oder im Holzschutzbereich, können aber gewünschtenfalls durchaus höhere Aktivsauerstoff-Bor-Molverhältnisse vorliegen; bevorzugte lagerstabile Lösungen für diese Verwendungen weisen z.B. Oa:B-Molverhältnisse von 1:1 bis 2:1 auf.

Mit den erfindungsgemäßen lagerstabilen Lösungen gelingt es vorteilhaft, Natriumperoxobor-Verbindungen als konzentrierte, insbesondere hochkonzentrierte, wäßrige Lösungen für diverse Anwendungszwecke zur Verfügung zu stellen. Die erfindungsgemäßen Lösungen weisen insbesondere im Vergleich zu wäßrigen Lösungen, die übliche Perborate (Natriumperborat-Monohydrat bzw. -Tetrahydrat) enthalten eine höhere Stabilität unter üblichen Lagerbedingungen (ca. 20 °C) auf. Beispielsweise weisen die erfindungsgemäßen Lösungen nach einer Lagerung über eine Zeitspanne von etwa vier Wochen noch wenigstens 95 %, bevorzugte erfindungsgemäße Lösungen sogar noch wenigstens 98 %, ihres ursprünglichen Aktivsauerstoffgehaltes auf. Unter üblichen Lagerbedingungen sind die erfindungsgemäßen Lösungen durchaus mindestens 3 Monate lagerstabil, d.h. sie zeigen in dieser Zeit keine Kristallisation und besitzen nach diesem Zeitraum immer noch hohe Aktivsauerstoffgehalte.

Die erfindungsgemäßen lagerstabilen Lösungen lassen sich in einfacher Weise herstellen, indem man eine wäßrige Lösung oder Suspension, die als Ausgangsstoffe eine Borsauerstoffverbindung und Natriumhydroxid enthält, gegebenenfalls unter Zusatz von weiterem Wasser zur Einstellung einer gewünschten Konzentration, mit Wasserstoffperoxid oder einem Ausgangsstoff für die in situ-Bildung von Wasserstoffperoxid vermischt und - gegebenenfalls bei erhöhter Temperatur - unter Rühren reagieren läßt. Die Ausgangsstoffe werden dabei dem Reaktionsgemisch in solchen Anteilen zugeführt, daß einerseits ein Molverhältnis von Natrium zu Bor von 0,60:1 bis 0,67:1 vorliegt und andererseits das molare Verhältnis von Aktivsauerstoff zu Bor wenigstens 0,9:1, vorzugsweise 1:1 bis 2:1, beträgt. Es ist zwar vorteilhaft, die Ausgangsstoffe gleich unter Einhaltung der oben angegebenen Molverhältnisse umzusetzen, doch ist es auch möglich die Reaktion bei anderen Molverhältnissen zu beginnen und erst während der Umsetzung die angegebenen Molverhältnisse allmählich einzustellen. Die einzusetzende Menge der Ausgangsstoffe wird vorteilhaft gleich so gewählt, daß die sich bildende Natriumpolyperoxobor-Verbindung in den entstehenden lagerstabilen Lösungen in einer Konzentration vorliegt, die einem Borgehalt von 6 bis 7,5 Gew.-% entspricht.

Als Ausgangsstoffe eignen sich alle bei der Herstellung von Perboraten an sich üblichen Quellen für Bor, Natrium und Aktivsauerstoff. Geeignete Quellen für Bor sind beispielsweise Borsäure, Boroxid (B₂O₃), Borax, z.B. Borax-Dekahydrat oder Borax-Pentahydrat, Metaborat, Bormineralien usw.; als Quelle für Aktivsauerstoff eignet sich beispielsweise Wasserstoffperoxidlösung (z.B. 30 bis 85 Gew.-%ig) oder Natriumperoxid; als Quelle für gegebenenfalls noch zu ergänzendes Natrium kann z.B. Natriumhydroxid als solches oder aus Natriumoxid im wäßrigen Medium in situ gebildetes Natriumhydroxid dienen. Weiterhin ist es z.B. auch möglich Orthoboratlösungen einzusetzen, wobei dann aber z.B. Borsäure oder Boroxid und gegebenenfalls zusätzlich eine anorganische Säure wie z.B. Schwefelsäure oder Phosphorsäure zugesetzt werden muß.

In zweckmäßigen Ausgestaltungen der Erfindung werden den erfindungsgemäßen lagerstabilen Lösungen an sich übliche Stabilisatoren für Perverbindungen zugesetzt oder bereits bei der Herstellung dieser Lösungen in gewünschter Menge eingebracht. Als Stabilisatoren eignen sich beispielsweise Phosphate wie Metaphosphat, organische Stabilisatoren wie Chinolinsäure, Salicylsäure oder Dipicolinsäure (DPA), Chelatbildner wie 8-Oxychinolin oder Ethylendiamintetraessigsäure (EDTA), Phosphonsäurederivate wie z.B Methylen- bzw. Aminomethylenphosphonsäuren oder deren Salze, sowie auch geringe Mengen üblicher Netzmittel. Besonders geeignete Stabilisatoren, insbesondere auch im Hinblick auf die Langzeitstabilität der erfindungsgemäßen Lösungen, sind z.B. 1-Hydroxyethan-1,1-diphosphonsäure, Ethylendiamintetraphosphonsäure, Diethylentriaminpentamethylenphosphonsäure und deren Salze, insbesondere deren Natriumsalze. Solche Stabilisatoren können in üblichen Konzentrationen von 0,1 bis 10 g/kg in den lagerstabilen Lösungen vorliegen. Werden die Stabilisatoren bereits bei der Herstellung der erfindungsgemäßen Lösungen eingebracht, so kann dieses über die eingesetzte Wasserstoffperoxidlösung geschehen. Insbesondere werden die Stabilisatoren dabei in solchen Mengen eingesetzt, wie sie später auch in der Produktlösung vorliegen sollen.

Sofern nach Ablauf der Reaktionen bei der Herstellung der erfindungsgemäßen lagerstabilen Lösungen, die darin enthaltenen Natriumperoxobor-Verbindungen bereits in einer für die jeweilige Anwendung geeigneten Konzentration vorliegen, können die erhaltenen Lösungen bereits als solche, gegebenenfalls nach weiterem Stabilisatorzusatz, einer weiteren Verwendung zugeführt werden. Es ist jedoch auch möglich durch Entzug bzw. Zufuhr von Wasser auf andere gewünschte Konzentrationen in den Lösungen einzustellen.

Die erfindungsgemäßen lagerstabilen Lösungen können in vielfältiger Weise verwendet werden. Zum einen können die Lösungen direkt in Formulierungen eingebracht werden, die ein Aktivsauerstoff-haltiges Bleichmittel enthalten sollen, z.B. in wäßrig-flüssige Waschmittelformulierungen oder Desinfektionsmittel, Formulierungen für die Zellstoffbleiche oder den Holzschutzbereich etc. Andererseits eignen sich die erfindungsgemäßen lagerstabilen Lösungen z.B. im weiter oben beschriebenen erfindungsgemäßen Verfahren hervorragend zur Herstellung von mikrokristallinem Natriumperborat-Tetrahydrat mit Partikeldurchmessern von höchstens 5 Mikrometer, vorzugsweise sogar von höchstens 3 Mikrometer. Ferner lassen sich die lagerstabilen Lösungen auch zur Herstellung von festen Natriumperoxobor-Verbindungen durch an sich übliche Trocknungsverfahren wie Sprühtrocknungs-oder Sprühgranulationsverfahren, gegebenenfalls auch Walzentrocknungsverfahren, einsetzen. Hierbei werden die für das jeweilige Verfahren an sich üblichen Verfahrensparameter eingehalten. Es erweist sich dabei als vorteilhaft, daß durch die hohe Konzentration an Natriumperoxobor-Verbindung in den erfindungsgemäßen lagerstabilen Lösungen nur geringe Wasseranteile zu verdampfen sind.

Das erfindungsgemäße Verfahren und die erfindungsgemäßen Produkte (lagerstabile Lösungen; Suspensionen, Pasten, trockene Partikel) bieten eine überraschende und problemlose Lösung für den vielfach vorhandenen Wunsch, Aktivsauerstoff-haltige Bleichmittel für vielfältige Anwendungen, insbesondere z.B. auch für wäßrig-flüssige Waschmittelformulierungen, bereitzustellen. Das erfindungsgemäße Verfahren und die erfindungsgemäßen Produkte gestatten es, in vorteilhafter Weise einen wesentlichen Gehalt an Persauerstoffbleichmittel in flüssige, insbesondere wäßrig-flüssige Formulierungen für Wasch-, Desinfektions-und Bleichzwecke, sowie andere Anwendungen einzubringen. Es werden durch die Erfindung Problemlösungen z.B. im Bereich der Formulierung flüssiger, insbesondere wäßrig-flüssiger Waschmittel mit Aktivsauerstoff-haltigen Bleichmitteln, im Bereich von Desinfektionsmitteln, Bleichmitteln etc. ermöglicht, die im Stand der Technik bisher nicht lösbar waren. So sind die erfindungsgemäßen Produkte mit an sich allen üblichen Bestandteilen solcher Formulierungen wie insbesondere z.B. mit Tensiden, Buildern, üblichen Hilfsstoffen wie z.B. Komplex- und Chelatbildner, Seifenschaumregulatoren und gegebenenfalls anderen üblichen Zusatzstoffen sehr gut verträglich.

Für die erfindungsgemäßen Lösungen ist es als besonders günstig zu bewerten, daß der Aktivsauerstoff in überraschend fest gebundener Form enthalten ist, wie dieses die hohe chemische Stabilität (Avox-Stabilität) über längere Lagerzeiten eindrucksvoll verdeutlicht. Andererseits wird der Aktivsauerstoff nach Verdünnung der erfindungsgemäßen Lösungen mit Wasser auf anwendungsgemäße Konzentrationen aber leicht freigesetzt und kann die für die Anwendung erwünschte Wirkung entfalten. Dieses ist überraschend; da mit üblichen Perboraten bisher keine vergleichbaren lagerstabilen wäßrigen und Aktivsauerstoffhaltigen Lösungen hergestellt werden konnten. Einerseits waren im Stand der Technik nicht die hohen Konzentrationen an gelöster Natriumperoxobor-Verbindung (ausgedrückt in Gew.-% Bor) erreichbar. Andererseits sind übliche Perborat-Lösungen schon bei Raumtemperatur leicht zersetzlich und unterliegen bei einer Lagerung ungewollten Aktivsauerstoff-Verlusten. Demgegenüber weisen die erfindungsgemäßen Lösungen hervorragende Aktivsauerstoff-Stabilität auf und gewährleisten eine hohe Lagerfähigkeit, insbesondere auch über handelsübliche Zeitspannen hinweg.

Der Gehalt an Natriumperoxobor-Verbindung in den erfindungsgemäßen Lösungen übersteigt zwar die Löslichkeit üblicher Perborate (Na:B=1:1) bei weitem, dennoch sind die konzentrierten Lösungen auch physikalisch lagerstabil und zeigen keine Neigung zu einer unerwünschten Kristallisation. Somit können diese problemlos vorformuliert und gelagert werden, wodurch eine hohe Flexibilität hinsichtlich Bereitstellung, Lagerung, Transport und Verarbeitung dieser Lösungen gewährleistet ist.

Das erfindungsgemäße Verfahren erlaubt es, hohe Konzentrationen an gelösten Peroxobor-Verbindungen als Vorstufe für die zu mikrokristallisierenden Perborat-Hydrate, insbesondere für PBS-4, einzustellen. Für die der Kristallisation der Perborat-Hydrate ist somit sichergestellt, daß eine sehr hohe Zahl an Kondensationskeimen weitgehend gleichzeitig gebildet werden kann, die zu den gewünschten sehr feinkristallinen Perborat-Hydrat-Partikeln führen.

Im Gegensatz zum eingangs erwähnten Verfahren des Standes der Technik kann die Gefahr von Nebenreaktionen zwischen oxidierbaren organischen Verbindungen wie z.B. Tensid und Wasserstoffperoxid vermieden werden. Beim erfindungsgemäßen Verfahren ist es nämlich nicht erforderlich, eine Reaktion zwischen Borsauerstoffverbindung und Wasserstoffperoxid in Gegenwart von Tensid und Builder durchzuführen, um mikrokristalline Perborat-Hydrate herzustellen.

Die folgenden Beispiele sollen zur weiteren Erläuterung der Erfindung dienen, ohne sie jedoch in ihrem Umfang zu beschränken.

### Beispiel 1

Zu 500 ml Wasser wurden zunächst 598 g festes Natriumhydroxid und anschließend 1,4 kg Borsäure (H₃BO₃) gegeben, wobei in Folge der Reaktionswärme die Temperatur auf 90 bis 100 °C anstieg. Nach Zugabe von 1,42 kg einer 70 gew.-%igen Wasserstoffperoxidlösung und von 48 g einer Lösung von Ethylendiamintetramethylenphosphonsäure-Pentanatriumsalz (25 Gew.-% an Aktivsäure in wäßriger Lösung) wurde die erhaltene klare Lösung auf Umgebungstemperatur abgekühlt. Die erhaltene klare Lösung zeichnete sich durch folgende Eigenschaften aus.

| | |
|---|---|
| Aktivsauerstoffgehalt: | 12,7 Gew.-% |
| Borgehalt: | 6,6 Gew.-% |
| Na:B-Molverhältnis: | 0,61:1 |
| Oa:B-Molverhältnis: | 1,28:1 |
| Dichte: | 1,42 g/l |
| pH-Wert: | 5,2 |

### Beispiel 2

Zu 386 l einer 70 gew.-%igen Wasserstoffperoxidlösung wurden 11 kg einer Lösung von Ethylendiamintetramethylenphosphonsäure-Pentanatriumsalz (25 Gew.-% an Aktivsäure in wäßriger Lösung) gegeben und anschließend darin 975 kg Borax-Dekahydrat (Na₂B₄O₇·10 H₂O) suspendiert. Nach Zugabe von 86,5 kg einer 50 gew.-%igen Natriumhydroxidlösung ließ man noch 30 Minuten reagieren. Es wurde eine klare Lösung mit folgenden Eigenschaften erhalten.

| | |
|---|---|
| Aktivsauerstoffgehalt: | 10,8 Gew.-% |
| Borgehalt: | 7,1 Gew.-% |
| Na:B-Molverhältnis: | 0,6:1 |
| Oa:B-Molverhältnis: | 1:1 |
| Dichte: | 1,47 g/l |
| pH-Wert: | 5,7 |

### Beispiel 3

Zu 477 l einer 50 gew.-%igen Wasserstoffperoxidlösung wurden zunächst 15 kg einer wäßrigen Lösung von Ethylendiamintetramethylenphosphonsäure-Pentanatriumsalz (25 Gew.-% an Aktivsäure in wäßriger Lösung) zugegeben und anschließend in der erhaltenen stabilisierten Wasserstoffperoxidlösung 600 kg Borax-Pentahydrat (Na₂B₄O₇·5 H₂O) suspendiert. Nach Zusatz von 66 kg einer 50 gew.-%igen Natriumhydroxidlösung erhielt man ein auf 40 °C erwärmtes Reaktionsgemisch. Nach einer Reaktionszeit von 30 Minuten erhielt man als Produkt eine klare Lösung mit folgenden Eigenschaften.

| | |
|---|---|
| Avox-Gehalt: | 10,7 Gew.-% |
| Borgehalt: | 7,3 Gew.-% |
| Na:B-Molverhältnis: | 0,6:1 |
| Oa:B-Molverhältnis: | 1,01:1 |
| Dichte: | 1,47 g/l |
| pH-Wert: | 5,6 |

### Beispiel 4

Zu 477 l einer 50 gew.-%igen Wasserstoffperoxidlösung wurden zunächst 11 kg einer wäßrigen Lösung von Diethylentriaminpentamethylenphosphonsäure-Pentanatriumsalz (25 Gew-% an Aktivsäure in wäßriger Lösung) zugegeben und anschließend in der erhaltenen stabilisierten Wasserstoffperoxidlösung 600 kg Borax-Pentahydrat (Na₂B₄O₇·5 H₂O) suspendiert. Nach Zusatz von 66 kg einer 50 gew.-%igen Natriumhydroxidlösung erhielt man ein auf 40 °C erwärmtes Reaktionsgemisch. Nach einer Reaktionszeit von 30 Minuten erhielt man als Produkt eine klare Lösung mit folgenden Eigenschaften.

| | |
|---|---|
| Avox-Gehalt: | 10,5 Gew.-% |
| Borgehalt: | 7,2 Gew.-% |
| Na:B-Molverhältnis: | 0,6:1 |
| Oa:B-Molverhältnis: | 0,99:1 |

### Beispiel 5

Zur Bestimmung der Lagerstabilität hinsichtlich des Aktivsauerstoffgehaltes wurden die in den Beispielen 1 bis 3 hergstellten Lösungen 30 Tage und die im Beispiel 4 hergestellte Lösung 35 Tage bei 20 °C und in jeweils einem weiteren Versuch 20 Minuten bei 90 °C gelagert. Anschließend wurde der durch Zersetzung bedingte Verlust an Aktivsauerstoff ermittelt (die Bestimmung des Aktivsauerstofgehaltes der Lösungen vor und nach der Lagerung erfolgte durch an sich bekannte titrimetrische Methoden). Die Ergebnisse sind in der nachfolgenden Tabelle 1 zusammengestellt.

**Tabelle 1**

| Lösung aus Beispiel Nr. | % Avox-Verlust 30 d/20 °C | % Avox-Verlust 20 min./90 °C |
|---|---|---|
| 1 | 1,6 | 2,6 |
| 2 | 4,2 | 4,5 |
| 3 | 3,9 | 4,7 |
| 4 | 3,2 | 4,3 |

### Beispiel 6

100 g der in Beispiel 3 hergestellten Lösung wurden mit 140 g Wasser zu einer Lösung mit einer Borkonzentration von 3 Gew.-% verdünnt. Anschließend wurden bei einer Temperatur von 60 °C 21,56 g einer 50 gew.-%igen Natriumhydroxidlösung zugesetzt und die erhaltene, klare Reaktionslösung zur Auslösung der Kristallisation auf eine Temperatur von 5 bis 10 °C abgekühlt. Nach 20 Minuten war die Kristallisation abgeschlossen. Man erhielt eine Suspension von mikrokristallinen Natriumperborat-Tetrahydrat-Partikeln. Die Suspension war als solche bereits verwendungsgeeignet.

### Beispiel 7

Aus der im Beispiel 6 erhaltenen Suspension wurden durch Zentrifugation bzw. Filtration die Natriumperborat-Tetrahydrat-Partikel abgetrennt und durch Trocknung bei 40 °C in einem Trockenschrank von noch anhaftender Restfeuchte befreit. Das Kristallwasser verblieb bei der Trocknung im wesentlichen im Produkt. Man erhielt für die mikrokristallinen Natriumperborat-Tetrahydrat-Partikel die nachfolgend aufgeführten Analysenergebnisse.

| | |
|---|---|
| Aktivsauerstoffgehalt: | 10,81 Gew.-% |
| Borgehalt: | 7,34 Gew.-% |
| Natriumgehalt: | 15,51 Gew.-% |
| Wassergehalt: | 32,4 Gew.-% (Kristallwasser) |
| Na:B-Molverhältnis: | 0,99:1 |
| Oa:B-Molverhältnis: | 0,99:1 |
| Partikeldurchmesser: | ≤ 5 Mikrometer (bestimmt aus Rasterelektronenmikroskopie-Aufnahmen) |

Die vorstehenden Analysenergebnisse belegen, daß in der hergestellten Suspension von mikrokristallinen Perborat-Hydrat-Partikeln des Beispiels 6 im wesentlichen ein mikrokristallines Natriumperborat-Tetrahydrat mit einem Partikeldurchmesser von ≤ 5 Mikrometer vorliegt.

### Beispiel 8

Die in Beispiel 3 hergestellte Lösung wurde mit Wasser zunächst zu einer Lösung mit einer Borkonzentration von 2 Gew.-% verdünnt. Anschließend wurden zu dieser auf 2 Gew.-% Bor verdünnten Lösung bei einer Temperatur von 60 °C 6,1 g einer 50 gew.-%igen Natriumhydroxidlösung zugesetzt und die erhaltene, klare Reaktionslösung zur Auslösung der Kristallisation auf eine Temperatur von 5 bis 10 °C abgekühlt. Nach 20 Minuten war die Kristallisation abgeschlossen. Man erhielt eine Suspension von mikrokristallinen Natriumperborat-Tetrahydrat-Partikeln. Die Suspension war als solche bereits verwendungsgeeignet.

### Beispiel 9

Aus der im Beispiel 8 erhaltenen Suspension wurden durch Zentrifugation bzw. Filtration die Natriumperborat-Tetrahydrat-Partikel abgetrennt und durch Trocknung bei 40 °C in einem Trockenschrank von noch anhaftender Restfeuchte befreit. Das Kristallwasser verblieb bei der Trocknung im wesentlichen im Produkt. Man erhielt für die mikrokristallinen Natriumperborat-Tetranydrat-Partikel die nachfolgend aufgeführten Analysenergebnisse.

| | |
|---|---|
| Aktivsauerstoffgehalt: | 10,67 Gew.-% |
| Borgehalt: | 7,3 Gew.-% |
| Natriumgehalt: | 14,9 Gew.-% |
| Wassergehalt: | 34,4 Gew.-% (Kristallwasser) |
| Na:B-Molverhältnis: | 0,96:1 |
| Oa:B-Molverhältnis: | 0,99:1 |
| Partikeldurchmesser: | ≤ 3 Mikrometer (bestimmt aus Rasterelektronenmikroskopie-Aufnahmen) |

Die vorsteheden Analysenergebnisse belegen, daß in der hergestellten Suspension von mikrokristallinen Perborat-Hydrat-Partikeln des Beispiels 8 im wesentlichen ein mikrokristallines Natriumperborat-Tetrahydrat mit einem Partikeldurchmesser von ≤ 3 Mikrometer vorliegt.

### Beispiel 10

Die in Beispiel 3 hergestellte Lösung wurde mit Wasser zunächst zu einer Lösung mit einer Borkonzentration von 4 Gew.-% verdünnt. Zu 100 g dieser auf 4 Gew.-% Borgehalt verdünnten Lösung wurden anschließend bei einer Temperatur von 60 °C 12,21 g einer 50 gew.-%igen Natriumhydroxidlösung zugesetzt und die erhaltene, klare Reaktionslösung zur Auslösung der Kristallisation auf eine Temperatur von 5 bis 10 °C abgekühlt. Nach 20 Minuten war die Kristallisation abgeschlossen. Man erhielt eine Paste aus mikrokristallinen Natriumperborat-Hydrat-Partikeln. Die Paste war als solche bereits verwendungsgeeignet und wies einen Aktivsauerstoffgehalt von 5,4 Gew.-% und Partikelgrößen ≤ 5 Mikrometer auf.

### Beispiel 11

Die in Beispiel 10 erhaltene Paste aus Natriumperborat-Hydrat-Partikeln wurde durch Trocknung bei 40 °C in einem Trockenschrank von noch anhaftender Restfeuchte befreit. Man erhielt für die mikrokristallinen Natriumperborat-Hydrat-Partikel die nachfolgend aufgeführten Analysenergebnisse.

| | |
|---|---|
| Aktivsauerstoffgehalt: | 11,1 Gew.-% |
| Borgehalt: | 7,7 Gew.-% |
| Natriumgehalt: | 15,0 Gew.-% |
| Wassergehalt: | 28,2 Gew.-% (Kristallwasser) |
| Na:B-Molverhältnis: | 0,96:1 |
| Oa:B-Molverhältnis: | 0,97:1 |
| Partikeldurchmesser: | ≤ 5 Mikrometer (bestimmt aus RasterelektronenmikroskopieAufnahmen) |

Die vorstehenden Analysenergebnisse belegen, daß in der hergestellten Paste des Beispiels 10 im wesentlichen mikrokristalline Perborat-Hydrat-Partikel mit einem Partikeldurchmesser von ≤ 5 Mikrometer vorliegen.

## Patentansprüche

1. Verfahren zur Herstellung von mikrokristallinen Perborat-Produkten mit einer Partikelgröße von höchstens 10 µm, dadurch gekennzeichnet, daß man
a) eine lagerstabile hochkonzentrierte wäßrige Lösung A, welche in Wasser gelöst solche Mengen an Borsauerstoffverbindung, Wasserstoffperoxid und Natriumhydroxid enthält, daß darin der auf die Gesamtlösung bezogene Borgehalt 3 bis 8 Gew.-%, das Molverhältnis von aus dem Natriumhydroxid und gegebenenfalls der Borsauerstoffverbindung stammenden Natrium zu Bor 0,60:1 bis 0,67:1 und das Molverhältnis von Aktivsauerstoff zu Bor mindestens 0,9:1 beträgt,
möglichst schnell mit einer konzentrierten wäßrigen Natriumhydroxidlauge unter Erwärmung bis etwa 100° C, vorzugsweise bis etwa 60° C, zu einer Lösung B umsetzt, wobei die Natriumhydroxydlauge und die Lösung A in solchen Mengen eingesetzt werden, daß in der Lösung B das Molverhältnis von Natrium zu Bor 0,90:1 bis 1:1 beträgt und die Borkonzentration 1 bis 4,5 Gew.-% bezogen auf die wäßrige Lösung B beträgt, und daß man
b) durch Abkühlung der erhaltenen Lösung B auf unterhalb etwa 20° C bis ggf. hinab zu 0° C das Perborat-Produkt zur Kristallisation bringt.

2. Verfahren nach Anspruch 1 zur Herstellung einer das mikrokristalline Perborat-Produkt und ein oder mehrere weitere, in Anspruch 1 nicht genannte, übliche, aus der Gruppe der Tenside, Builder und mit Wasser mischbaren Lösungsmittel ausgewählte Flüssigwaschmittelbestandteile enthaltenden wäßrigen Suspension, dadurch gekennzeichnet, daß man vor dem Verfahrensschritt a) die Lösung A oder die konzentrierte wäßrige Natriumhydroxidlauge mit wenigstens einem der genannten üblichen Flüssigwaschmittelbestandteile, vorzugsweise mit einem Tensid, versetzt.

3. Verfahren nach einem der vorhergehenden Ansprüche 1 oder 2, dadurch gekennzeichnet, daß die Lösung A Wasserstoffstoffperoxid in einer solchen Menge enthält, daß das Molverhältnis von Aktivsauerstoff zu Bor 0,9:1 bis 1,2:1, vorzugsweise von 0,9:1 bis 1,1:1, beträgt.

4. Verfahren nach Anspruch 3, dadurch gekennzeichnet, daß der Borgehalt in der lagerstabilen hochkonzentrierten wäßrigen Lösung A 6 bis 7,5 Gew.-% beträgt.

5. Lagerstabile hochkonzentrierte wäßrige Lösungen, welche solche Mengen an Borsauerstoffverbindung, Wasserstoffperoxid und Natriumhydroxid enthalten, daß darin der auf die Gesamtlösung bezogene Borgehalt 6 bis 7,5 Gew.-%, das Molverhältnis von aus dem Natriumhydroxid und gegebenfalls der Borsauerstoffverbindung stammenden Natrium zu Bor 0,60:1 bis 0,67:1 und das Molverhältnis von Aktivsauerstoff zu Bor mindestens 0,9:1 beträgt, und wobei die Lösung eine Dichte von 1,4 bis 1,5 g/l und einen pH-Wert im Bereich von 5 bis 6 aufweist.

6. Lagerstabile hochkonzentrierte wäßrige Lösungen nachAnspruch 5, gekennzeichnet durch ein Molverhältnis von Aktivsauerstoff zu Bor von 1:1 bis 2:1.

## Claims

1. Process for the production of microcrystalline perborate products with a particle size of maximum 10µm, characterised in that
a) a highly concentrated aqueous solution A which is stable in storage and, when dissolved in water, contains quantities of boron oxygen compound, hydrogen peroxide and sodium hydroxide such that, based on the solution as a whole, the boron content therein is 3 to 8 % by weight, the molar ratio of sodium originating from the sodium hydroxide and, if applicable, the boron oxygen compound, to boron is 0.60:1 to 0.67:1 and the molar ratio of active oxygen to boron is at least 0.9:1,
is reacted as rapidly as possible with a concentrated aqueous sodium hydroxide solution with heating to approx. 100°C, preferably to approx. 60°C, to form a solution B, the sodium hydroxide solution and solution A being used in quantities such that the molar ratio of sodium to boron in solution B is 0.90:1 to 1:1 and the boron concentration is 1 to 4.5 % by weight, based on the aqueous solution B and that
b) the perborate product is caused to crystallise by cooling solution B thus obtained to below approx. 20°C, if necessary to as low as 0°C.

2. Process according to claim 1 for the production of an aqueous suspension containing the microcrystalline perborate product and one or several further, common liquid detergent components not mentioned in claim 1 and selected from the group of surfactants, builders and water-immiscible solvents, characterised in that, before process step a), at least one of said common liquid detergent components, preferably a surfactant, is added to solution A or the concentrated aqueous sodium hydroxide solution.

3. Process according to one of the preceding claims 1 or 2, characterised in that solution A contains hydrogen peroxide in a quantity such that the molar ratio of active oxygen to boron is 0.9:1 to 1.2:1, preferably 0.9:1 to 1.1:1.

4. Process according to claim 3 characterised in that the boron content in the highly concentrated aqueous solution A stable in storage is 6 to 7.5 % by weight.

5. Highly concentrated aqueous solutions stable in storage, which contain quantities of boron oxygen compound, hydrogen peroxide and sodium hydroxide such that, based on the solution as a whole, the boron content therein is 6 to 7.5 % by weight, the molar ratio of sodium originating from sodium hydroxide and, if applicable, the boron oxygen compound, to boron is 0.60:1 to 0.67:1 and the molar ratio of active oxygen to boron is at least 0.9:1, the solution having a density of 1.4 to 1.5 g/l and a pH in the region of 5 to 6.

6. Highly concentrated aqueous solutions stable in storage according to claim 5 characterised by a molar ratio of active oxygen to boron of 1:1 to 2:1.

## Revendications

1. Procédé pour la préparation de produits microcristallins de perborate possédant une granulométrie maximale de 10 µm, caractérisé en ce que
a) on fait réagir une solution aqueuse A très concentrée et stable à l'entreposage, qui contient, dissoutes dans de l'eau, des quantités d'un composé de bore-oxygène, de peroxyde d'hydrogène et d'hydroxyde de sodium, telles que la concentration en bore, rapportée à la solution totale, s'y élève de 3 à 8 % en poids, que le rapport molaire du sodium issu de l'hydroxyde de sodium et, le cas échéant, du composé de bore-oxygène au bore s'élève de 0,60:1 à 0,67:1, et que le rapport molaire de l'oxygène actif au bore s'élève au moins à 0,9:1, le plus rapidement possible avec une lessive aqueuse concentrée d'hydroxyde de sodium en chauffant jusqu'à une température d'environ 100 °C, de préférence jusqu'à une température d'environ 60 °C pour obtenir une solution B, en mettant en oeuvre la lessive d'hydroxyde de sodium et la solution A dans des quantités telles que, dans la solution B, le rapport molaire du sodium au bore s'élève de 0,90:1 à 1:1 et que la concentration en bore s'élève de 1 à 4,5 % en poids rapportés à la solution aqueuse B, et en ce que
b) par refroidissement de la solution B obtenue à une température inférieure à environ 20 °C jusqu'à, le cas échéant, une température allant jusqu'à 0 °C, on amène le produit de perborate à la cristallisation.

2. Procédé selon la revendication 1 pour la préparation d'une suspension aqueuse contenant le produit microcristallin de perborate et un ou plusieurs autres constituants de détergents liquides non repris dans la revendication 1, habituels, choisis parmi le groupe des agents tensioactifs, des adjuvants et des solvants miscibles à l'eau, caractérisé en ce que, avant l'étape opératoire a), on ajoute à la solution A ou à la lessive aqueuse concentrée d'hydroxyde de sodium, au moins un des constituants de détergents liquides habituels mentionnés, de préférence un agent tensioactif.

3. Procédé selon l'une quelconque des revendications précédentes 1 ou 2, caractérisé en ce que la solution A contient du peroxyde d'hydrogène en une quantité telle que le rapport molaire de l'oxygène actif au bore s'élève de 0,9:1 à 1,2:1, de préférence de 0,9:1 à 1,1:1.

4. Procédé selon la revendication 3, caractérisé en ce que la teneur en bore de la solution aqueuse A très concentrée et stable à l'entreposage s'élève de 6 à 7,5 % en poids.

5. Solutions aqueuses très concentrées et stables à l'entreposage qui contiennent des quantités d'un composé de bore-oxygène, de peroxyde d'hydrogène et d'hydroxyde de sodium telles que la teneur en bore, rapportée à la solution totale, s'y élève de 6 à 7,5 % en poids, que le rapport molaire du sodium issu de l'hydroxyde de sodium et le cas échéant du composé de bore-oxygène au bore s'élève de 0,60:1 à 0,67:1, et que le rapport molaire de l'oxygène actif au bore s'élève au moins à 0,9:1, et dans lesquelles la solution présente une masse volumique de 1,4 à 1,5 g/l et une valeur de pH dans le domaine de 5 à 6.

6. Solutions aqueuses très concentrées et stables à l'entreposage selon la revendication 5, caractérisées par un rapport molaire de l'oxygène actif au bore de 1:1 à 2:1.
